(19) Europäisches Patentamt
European Patent Office
Office européen des brevets

(11) **EP 1 867 385 A1**

(12) **EUROPEAN PATENT APPLICATION**
published in accordance with Art. 158(3) EPC

(43) Date of publication:
**19.12.2007 Bulletin 2007/51**

(51) Int Cl.:
***B01J 19/00*** (2006.01)   ***G01N 35/08*** (2006.01)
***G01N 37/00*** (2006.01)

(21) Application number: **06729130.2**

(22) Date of filing: **15.03.2006**

(86) International application number:
**PCT/JP2006/305109**

(87) International publication number:
**WO 2006/109397 (19.10.2006 Gazette 2006/42)**

(84) Designated Contracting States:
**DE FR GB**

(30) Priority: **31.03.2005 JP 2005103522**

(71) Applicant: **Konica Minolta Medical & Graphic, Inc.
Hino-shi
Tokyo 191-8511 (JP)**

(72) Inventors:
• **HIGASHINO, K.,
Konica Minolta Med. & Graphic, Inc.
Takatsuki-shi, Osaka 5698503 (JP)**

• **SANDO, Y.,
Konica Minolta Medical & Graphic, Inc.
Takatsuki-shi, Osaka 5698503 (JP)**
• **NAKAJIMA, A.,
Konica Minolta Med. & Graphic, Inc.
Hino-shi, Tokyo 1918511 (JP)**

(74) Representative: **Gille Hrabal Struck Neidlein Prop Roos
Brucknerstrasse 20
40593 Düsseldorf (DE)**

(54) **BACKFLOW PREVENTION STRUCTURE, AND MICROCHIP FOR INSPECTION AND INSPECTION DEVICE THAT USE THE SAME**

(57) At the joining section where two flow paths join, a reverse flow preventing means is installed in one flow path on the upstream side of the joining section and the flow path resistance of the reverse flow preventing means is set so as to be larger than the overall flow path resistance which is the total flow path resistance of the upstream and downstream sides of the joining section in the other flow path.

FIG. 7

## Description

## TECHNICAL FIELD

This invention relates to a microchip for inspection that can be used as a micro-reactor in gene screening for example, and to an inspection device which uses this microchip.

## BACKGROUND

In recent years, due to the se of micro-machine technology and microscopic processing technology, systems are being developed in which devices and means for example pumps, valves, flow paths, sensors and the like, for performing conventional sample preparation, chemical analysis, chemical synthesis and the like are caused to be ultra-fine and integrated on a single chip.

These systems are called μ-TAS (Micro Total Analysis System), bioreactor, lab-on-chips, and biochips, and much is expected of their application in the fields of medical testing and diagnosis, environmental measurement and agricultural manufacturing.

As seen in gene screening in particular, in the case where complicated steps, skilful operations, and machinery operations are necessary, a microanalysis system which is automatic, has high speed and is simple is very beneficial not only in terms of reduction in cost, required amount of sample and required time, but also in terms of the fact that it makes analysis possible in cases where time and place cannot be selected.

In various testing such as clinical testing, the quantitative properties of the analysis and accuracy of the analysis at the time of measurements using the chip type micro-reactor which quickly produces results in any places are considered important.

As a result, the task at hand is to ensure a feeding system which has a simple structure and is highly reliable, since there are severe limitation with respect to form and size of the analysis chip such as the chip type micro-reactor. A micro fluid control element which has high accuracy and excellent reliability is needed. The inventors of this invention have already proposed a suitable micro-pump system as a micro fluid control element which meets this need Patent Document 1 (Unexamined Japanese Patent Application Publication No. Tokkai 2001-322099) and Patent Document 2 (Unexamined Japanese Patent Application Publication No. Tokkai 2004-108285 Publication).

Furthermore, the inventors of the present invention have already proposed in Patent Document 3 (Unexamined Japanese Patent Application Publication No. Tokugan 2004-138959), a microchip for inspection (micro-reactor) including a specimen storage section in which specimen is stored; a reagent storage in which reagent is stored; a reaction section which has a reaction path in which the specimen stored in the specimen storage section and the reagent stored in the reagent storage section are mixed, and prescribed reaction processes are performed; and a inspection section which has a inspection path for performing prescribed tests on the reaction products obtained from the reaction in the reaction section, and the specimen storage section, the reagent storage section, the reaction section, and the inspection section, are connected by a continuous flow path from the upstream side to the downstream side on a single flow path.

In the micro-reactor of Patent Document 3 (Unexamined Japanese Patent Application Publication No. Tokugan 2004-138959), a number of reverse flow prevention sections for preventing a reverse flow of the liquid at the joining section where two flow paths join in the flow path. Each of these reverse flow prevention sections is constituted of a check valve for closing the flow path opening with a valve element by the reverse flow pressure or an active valve for closing the opening with valve element pushed toward the flow path opening by a valve transformation means.

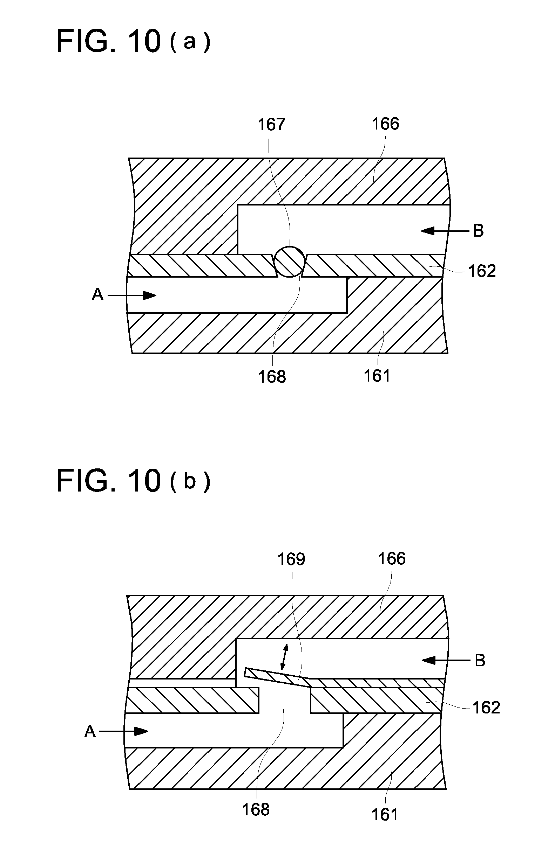

Specifically, the check valve in Fig. 10 (a) has a micro-sphere 167 as a valve element and by opening and closing the opening 168 formed in the substrate 162 due to travel of the micro-sphere 167, the passage of fluid is permitted or interrupted.

In other words, when the fluid is fed from the A direction, the micro-sphere 167 separates from substrate 162 due to the fluid pressure and the opening 168 is opened and thus the flow of fluid is permitted. On the other hand, in the case where the fluid is fed from the B direction, the micro-sphere 167 sits on the substrate 162 and the opening 168 is closed, and thus the flow of fluid is interrupted.

In the check valve in Fig. 10 (b), the elastic substrate 169 which is formed as a layer on the substrate 162 and whose end protrudes above the opening 168 opens and closes the opening 168 due to upward and downward movement above the opening 168 due to fluid pressure.

In other words, when the fluid is fed from the A direction, the end of the elastic substrate 169 separates from substrate 162 due to the fluid pressure and the opening 168 is released and thus the flow of fluid is permitted. On the other hand, in the case where the fluid is fed from the B direction, the elastic substrate 169 sits on the substrate 162 and the opening 168 is closed, and thus the flow of fluid is interrupted.

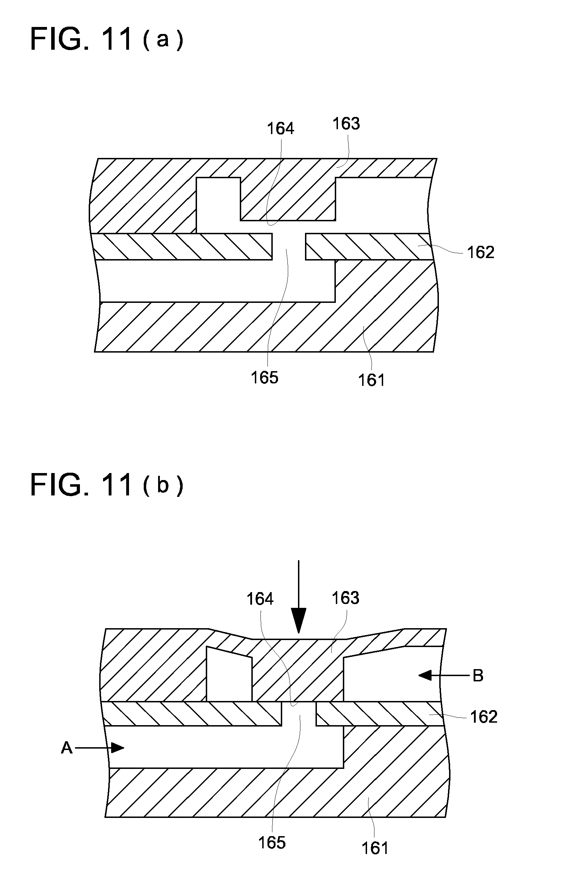

Further, in this active valve shown in Fig. 11(a), the elastic substrate 163 which has a valve portion 164 that protrudes downward is formed as a layer on top of substrate 162 in which the opening 165 is formed.

As shown in Fig. 11(b) when the valve is closed, the valve portion 164 adheres to the substrate 162 so as to cover the opening 165 by pressing of a valve deforming means such as an air pressure piston, an oil pressure piston or a water pressure piston or a piezoelectric actuator, or a shape memory alloy actuator, and reverse flow in the B direction is thereby prevented.

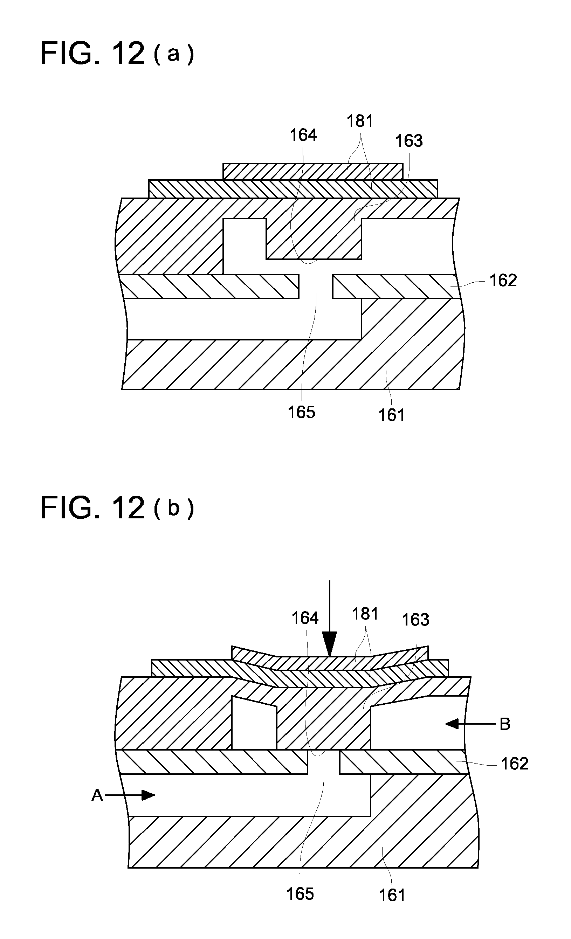

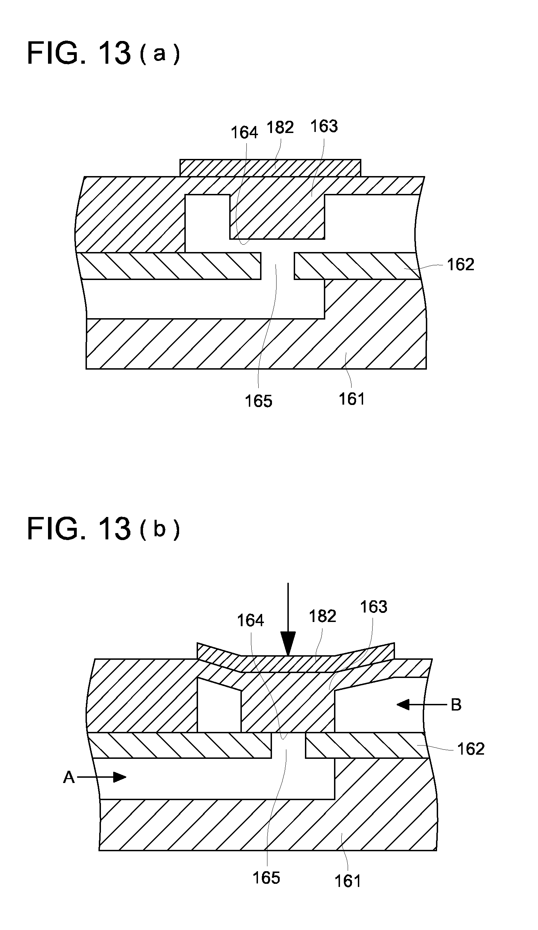

In addition the operation of the active valve is not limited to an external driving device, and the valve itself may transform to close the flow path. For example, as shown in Fig. 12, the bimetal 181 may be used and transformation may be done by electrical heating, or alternatively, as shown in Fig. 13, transformation may be done by electrical heating using a shape memory alloy 182.

However, in the check valves composing the reverse flow prevention section of this conventional inspection microchip as shown in Figs. 10 to 13, it is necessary to divide each of them by a substrate 162 and form a flow path of a multi-layer structure in the thickness direction of the inspection microchip, thus the inspection microchip in the flow path becomes thicker and is made larger.

Further, in the check valve shown in Fig. 10(a), it is necessary to use a minute sphere 167 as a valve element, form an opening 168 in the flow path, and arrange the minute sphere 167 in it, so that the constitution is complicated, and the manufacturing steps are also complicated, and the cost is increased.

Further, also in the check valve shown in Fig. 10(b), it is necessary to form a elastic substrate 169 which is laminated on the substrate 162 and is equipped with an end extended above the opening 168, so that the constitution is complicated, and the manufacturing steps are also complicated, and the cost is increased.

Furthermore, in the active valve shown in Fig. 11, it is necessary to arrange a elastic substrate 163 equipped with a valve section 164 projected downward and compress the elastic substrate 163 from above by valve element transforming means such as air pressure, oil pressure, a hydraulic piston, a piezo-electric actuator, and a shape memory alloy actuator, so that a drive mechanism is necessary separately, and the constitution is complicated, and the manufacturing steps are also complicated, and the cost is increased, as well as the inspection microchip is made larger.

Furthermore, as shown in Figs. 12 and 13, it is necessary to arrange a bimetal 181 and a shape memory alloy 182 and transform them by power supply and heating, so that a power supply mechanism is necessary separately, and the constitution is complicated, and the manufacturing steps are also complicated, and the cost is increased, as well as the inspection microchip is made larger.

Patent Document 1: Unexamined Japanese Patent Application Publication No. Tokkai 2001-322099

Patent Document 2: Unexamined Japanese Patent Application Publication No. Tokkai 2004-108285

Patent Document 3: Unexamined Japanese Patent Application Publication No. Tokugan 2004-138959

Nonpatent Document 1: DNA Chip Technology and Application Thereof, "Protein, nucleic acid, enzyme", Volume 43, No. 13 (1998), Fusao Kimizuka, Yunoshin Kato, by Kyoritsu Shuppan, Ltd.

## DISCLOSURE OF THE INVENTION

The present invention was developed in view of the foregoing situation and is intended to provide a highly reliable inspection microchip which has a reverse flow prevention structure composing a reverse flow prevention section for preventing reverse flow of a liquid at a joining section where two flow paths of the inspection microchip join, requires no separate drive mechanism, uses a simple structure, causes no enlargement of inspection microchip, reduces the manufacturing cost, surely prevents reverse flow of a liquid, and executes accurate inspection, as well as an inspection device using it.

The present invention was developed to solve and accomplish the problem and object of the prior art as mentioned above and the reverse flow prevention structure of the present invention includes:

a reverse flow preventing means installed in one flow path on the upstream side of a joining section where two flow paths join, wherein:

the flow path resistance of the reverse flow preventing means is set so as to be larger than the overall flow path resistance which is the total of the upstream and downstream flow path resistances of the joining section in the other flow path.

Further, the reverse flow prevention structure of the inspection microchip of the present invention is a reverse flow prevention structure of the inspection microchip and includes:

a reverse flow preventing means installed in one flow path on the upstream side of a joining section where two flow paths join, wherein:

the flow path resistance of the reverse flow preventing means is set so as to be larger than the overall flow path resistance which is the total of the upstream and downstream flow path resistances of the joining section in the other flow path.

Further, the inspection microchip of the present invention includes:

a specimen storage section for storing a specimen, a reagent storage section for storing a reagent, a reaction section having a reaction flow path for joining the specimen stored in the specimen storage section and the reagent stored in the reagent storage section and performing a predetermined reaction process for them, and an inspection section having an inspection flow path for performing a predetermined inspection for a reaction product obtained by reaction at the reaction section, wherein:

the inspection microchip is an inspection microchip in which the specimen storage section, reagent storage section, reaction section, and inspection section are connected continuously by the flow paths from the upstream side to the downstream side in a series of flow paths and includes a reverse flow preventing means installed in one flow path on the upstream side of a joining section where two flow paths join, wherein:

the flow path resistance of the reverse flow preventing means is set so as to be larger than the overall flow path resistance which is the total of the upstream and downstream flow path resistances of the joining section in the other flow path.

## BRIEF DESCRIPTION OF THE DRAWINGS

Fig. 1 is a perspective view showing an embodiment of the inspection device of the present invention composed of the inspection microchip of the present invention and the inspection device body for removably mounting the inspection microchip.

Fig. 2 is a top view showing only all the flow paths formed on the inspection microchip shown in Fig. 1.

Fig. 3 is a partially enlarged view showing the reagent storage section on the flow path shown in Fig. 2.

Fig. 4 is a partially enlarged view showing all the flow paths branching from the reagent storage section on the flow path shown in Fig. 2.

Fig. 5(a) is a cross sectional view showing an example of a micro-pump 11 using a piezo-electric pump, and Fig. 5(b) is a top view thereof, and Fig. 5(c) is a cross sectional view showing another embodiment of the micro-pump 11.

Fig. 6 is a schematic top view showing the constitution of the reagent quantification section.

Fig. 7 is a schematic view showing the embodiment of the flow paths of the inspection microchip showing the constitution of the reverse flow prevention section of the present invention.

Fig. 8 is a schematic view showing the constitution of the reverse flow prevention section of the present invention embodiment.

Fig. 9 is a schematic view showing the constitution of the reverse flow prevention section of the present invention embodiment.

Fig. 10 is a cross sectional view showing schematically the constitution of the reverse flow prevention section.

Fig. 11 is a cross sectional view showing schematically the constitution of the reverse flow prevention section.

Fig. 12 is a cross sectional view showing schematically the constitution of the reverse flow prevention section.

Fig. 13 is a cross sectional view showing schematically the constitution of the reverse flow prevention section.

## DESCRIPTION OF SYMBOLS

| 1 | Inspection device |
|---|---|
| 2 | Microchip for inspection |
| 3 | Inspection device body |
| 11 | Micro-pump |
| 12 | Pump connection portion |
| 13 | Feed control section |
| 13a | Feed control section |
| 13b | Feed control section |
| 15a-15h | Flow path |
| 16 | Reverse flow prevention section |
| 17a | Reservoir section |
| 17b | Reservoir section |
| 18 | Reagent storage section |
| 18a | Reagent storage section |
| 20 | Specimen storage section |
| 21a | Stopping solution storage section |
| 21b | Denaturant storage section |
| 21c | Hybridization buffer storage section |
| 21d | Cleaning liquid storage section |
| 21e | Gold colloid solution storage section |
| 21f | Probe DNA solution storage section |
| 21g | Probe DNA solution storage section for internal control |
| 21h | Positive control storage section |
| 21i | Negative control storage section |
| 22a | Detection sections |
| 22b | Detection sections |
| 23 | Waste liquid reservoir section |
| 25 | Drive fluid |
| 31 | Reagent |
| 41 | Upper substrate |
| 42 | Substrate |
| 43 | Diaphragm (Vibration plate) |
| 44 | Piezoelectric element |
| 45 | Pressure chamber |
| 46 | First flow path |
| 47 | Second flow path |
| 48 | First fluid chamber |
| 49 | Second fluid chamber |
| 50 | Microchip for inspection |
| 51 | Liquid feeding pump |
| 52 | Specimen feed flow path |
| 53 | Liquid feeding pump |
| 54 | First reagent flow path |
| 55 | Liquid feeding pump |
| 56 | Second reagent flow path |
| 57,58 | Joining section |

| 59 | Reagent feed flow path |
| 60 | Reaction flow path |
| 61 | Air vent |
| 62 | Liquid feeding control section |
| 68 | Opening |
| 70 | Reverse flow preventing means |
| 71 | Silicon substrate |
| 72 | Port |
| 73 | Port |
| 80 | Flow path |
| 82 | Reverse flow prevention flow path |
| 84 | Baffle plate member |
| 86 | Fine-diameter part |
| 162 | Substrate |
| 163 | Elastic substrate |
| 164 | Valve portion |
| 165 | Opening |
| 167 | Minute sphere |
| 168 | Opening |
| 169 | Elastic substrate |
| 181 | Bimetal |
| 182 | Shape memory alloy |

**DESCRIPTION OF THE PREFERRED EMBODIMENT**

In one flow path for preventing reverse flow like this, the flow path resistance on the upstream side of the reverse flow preventing means is set so as to be larger than the overall flow path resistance which is the total of the upstream and downstream flow path resistances of the joining section in the other flow path.

Therefore, when feeding a liquid to be fed from the other flow path to the joining flow path, the flow path resistance of the reverse flow preventing means is set larger than the overall flow path resistance which is the total of the upstream and downstream flow path resistances of the joining section in the other flow path, so that the liquid can be surely prevented from reversely flowing into another flow path on the upstream side of the reverse flow preventing means.

Further, when feeding a liquid to be fed from one flow path to the joining flow path, the liquid is fed at a pump pressure sufficiently high to supplement a pressure drop due to the flow path resistance of the reverse flow preventing means, thus the liquid to be fed through the reverse flow preventing means from the one flow path can be fed to the joining flow path.

Therefore, the pressure of the liquid feeding pump to one flow path is set to a pump pressure higher than the pressure of the liquid feeding pump to the other flow path, and the operation of these liquid feeding pumps is switched, thus the liquids to be selectively fed from one flow path and the other flow path can be surely fed to the joining flow path and the liquid from the joining flow path to one flow path to be prevented from reverse flow can be surely prevented from reverse flow.

Moreover, when the operation of the liquid feeding pumps is switched like this, the liquid from one flow path and the liquid from the other flow path become laminar flows and these liquids are mixed efficiently in the joining flow path.

Therefore, for example, in the inspection microchip, the reverse flow prevention structure of the present invention can be applied so that one flow path is used as a reagent flow path communicating with the reagent storage section for storing a reagent, and the other flow path is used as a specimen flow path communicating with the specimen storage section for storing a specimen.

Therefore, the pressure of the liquid feeding pump to the reagent flow path is set to a pump pressure higher than the pressure of the liquid feeding pump to the specimen flow path, and the operation of the liquid feeding pumps is switched, thus the reagent from the reagent flow path and the specimen from the specimen flow path can be selectively fed surely to the joining flow path, and the reverse flow is prevented so that the reverse flow of the joined liquid from the joining flow path to the reagent flow path can be surely prevented for prevention of the contamination of the reagent storage section.

Moreover, the operation of the liquid feeding pumps is switched like this, thus the reagent from the reagent flow path and the specimen from the specimen flow path become laminar flows and the reagent and specimen are mixed efficiently in the joining flow path, and an accurate inspection can be executed, and a highly reliable inspection microchip can be provided.

Further, the present invention is structured so as to feed a reagent, a specimen, a mixed liquid thereof, or a treated liquid from one flow path aforementioned to the downstream side of the joining section, to collect the target liquid in the flow path on the downstream side, and squeeze the concerned liquid downward by a liquid in the other flow path.

By use of such a constitution, with the reverse flow preventing means being a boundary, the interaction of the liquid flow is cut off on the upstream side and downstream side, so that more accurate liquid feeding is made possible.

Further, at this time, if the liquid feeding pump to one flow path is not driven, (although there is the flow path resistance of the reverse flow preventing means) due to the liquid pressure in the other flow path, reverse flow, though slight, is caused in one flow path. To prevent it, the liquid feeding pump in one flow path is driven at a lower pressure than that of the liquid feeding pump in the other flow path, thus the slight reverse flow aforementioned can be prevented.

Further, in this case, the liquid in the other flow path may not be a reagent or a specimen but be a driving liquid for squeezing them.

Further, according to the present invention, the reverse flow preventing means is composed of a reverse flow prevention flow path having a smaller sectional area of flow path than the sectional area on the downstream side flow path.

By use of such a constitution, the flow path resistance from the flow path having a larger sectional area (a larger diameter) on the downstream side to the reverse flow prevention flow path having a smaller sectional area (a smaller diameter) of the flow path is increased, thus reverse flow from the joining flow path on the downstream side through the reverse flow prevention flow path to the flow path on the upstream side of the reverse flow prevention flow path can be prevented surely.

Therefore, such a reverse flow prevention flow path is arranged at a predetermined location of the flow path of the inspection microchip, controls the pump pressure from the micro-pump, switches the operation of the pumps, thereby selectively controls stop and passage of liquids from the two flow paths, and can control the liquid feeding timing.

By doing this, for example, a reagent and a specimen join at an appropriate time or join and react at a predetermined mixing ratio, thus a predetermined inspection can be executed accurately.

Further, according to the present invention, the reverse flow preventing means is composed of a reverse flow prevention flow path having a baffle plate member arranged in the flow path.

By use of such a constitution, due to the baffle plate member arranged in the flow path, the resistance of the reverse flow prevention flow path is increased, thus reverse flow from the joining flow path on the downstream side through the reverse flow prevention flow path to the flow path on the upstream side of the reverse flow prevention flow path can be prevented surely.

Therefore, such a reverse flow prevention flow path is arranged at a predetermined location of the flow path of the inspection microchip, controls the pump pressure from the micro-pump, switches the operation of the pumps, thereby selectively controls stop and passage of liquids from the two flow paths, and can control the liquid feeding timing.

As a result, the specimen and the reagent, for example, are mixed at appropriate times and at a prescribed mixing ratio to react with each other, and prescribed inspection can be accurately performed.

In addition, in the microchip for inspection of this invention, the specimen storage section is equipped with specimen preliminary processing section for joining a specimen and a specimen preliminary processing liquid and for conducting a specimen pretreatment.

Due to this configuration, preliminary processing appropriate for the amplification reaction of the specimen such as separation and condensation of the analyte or protein removal can be carried out, and a microchip for inspection can be provided so that a prescribed inspection can be performed efficiently and quickly.

Further, the inspection device of this invention is formed by mounting of the microchip for inspection so as to be removable, and such that inspection can be performed in the inspection section of the microchip for inspection.

Due to this type of configuration, prescribed inspection can be performed accurately and quickly by simply mounting the microchip for inspection which is portable and has excellent handling properties to a inspection device, without the need to use special techniques or performing difficult and complex operations.

The following is a detailed description of the preferred embodiments (examples) of this invention with reference to the drawings.

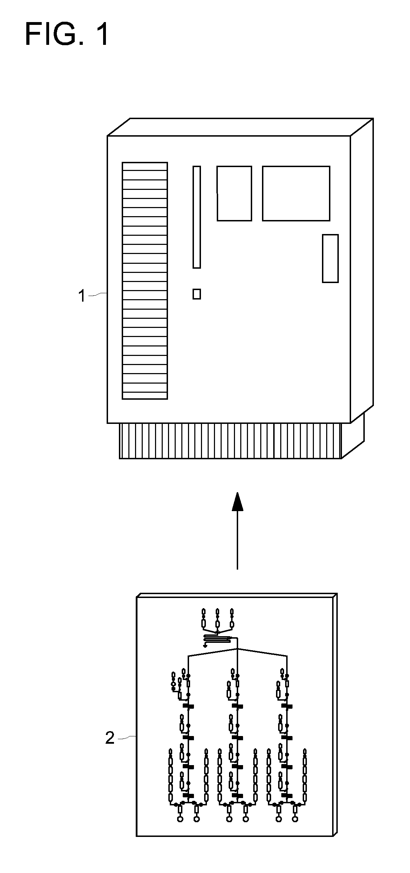

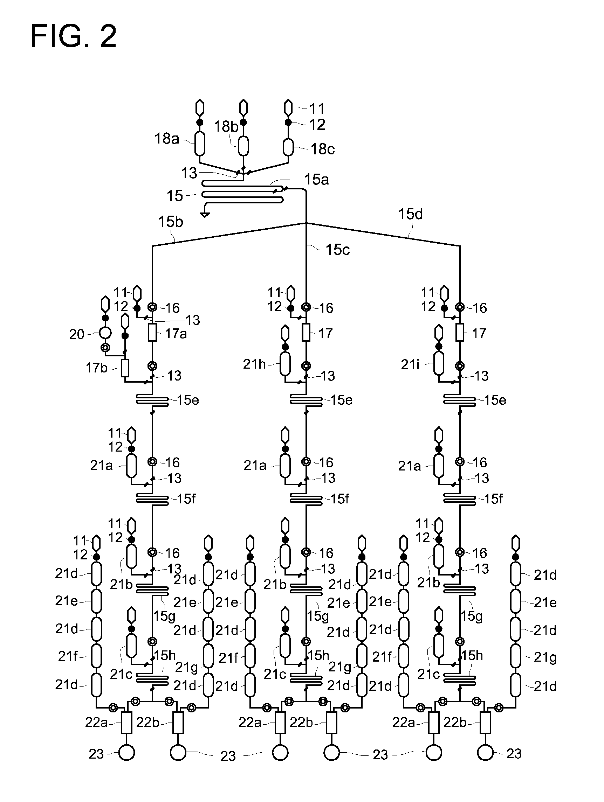

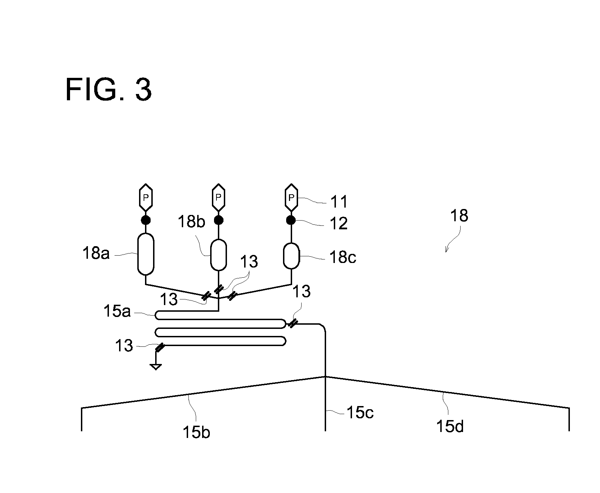

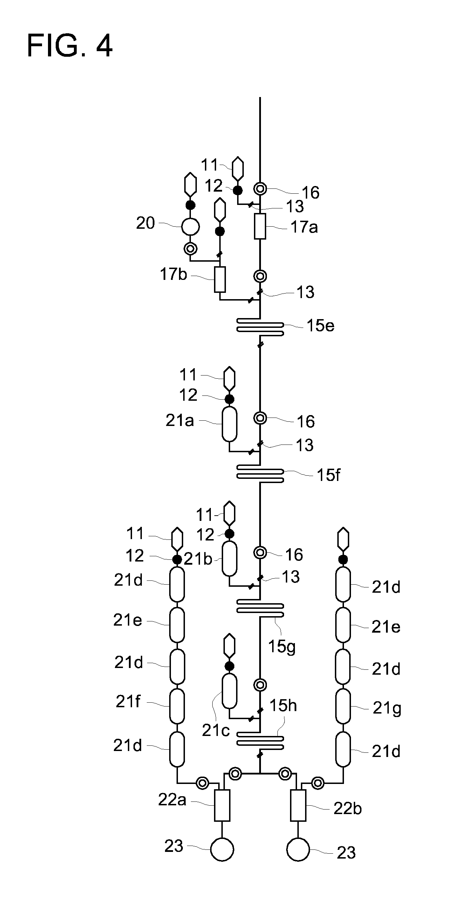

Fig. 1 is a perspective view of an example of the inspection device of this invention which includes the microchip for inspection of this invention and the inspection device body in which the microchip for inspection is mounted so as to be detachable. Fig. 2 is an upper surface view showing only the entire flow paths formed in the microchip for inspection of Fig. 1. Fig. 3 is a partial enlarged view of the reagent storage portion of the flow paths shown in Fig. 2. Fig. 4 is a partial enlarged view of all the flow paths branching from the reagent storage section of Fig. 2.

In Fig. 1, numeral 1 shows the entire inspection device of this invention, and the inspection device 1 includes the microchip for inspection 2, and the inspection device body 3 in which the microchip for inspection 2 is mounted so as to be detachable and in which prescribed inspection is performed.

As shown in Fig. 1, the microchip for inspection 2 is a rectangular-shaped card-like object, and is formed of a single chip made of resin, glass, silicon, ceramics or the like.

A series of flow paths are formed in the microchip for inspection 2 as shown in Fig. 2.

It is to be noted that in the following description, the microchip for inspection 2 is one for gene screening. However, the microchip for inspection 2 is not limited to this example, and may be use for screening various specimens. In addition, the arrangement, shape, dimensions, size and the like of the flow path configuration described in the following, may be subjected to various modifications based the type of a specimen or inspection items.

That is to say, the microchip for inspection 2 in this example is one in which an amplification reaction is carried out using ICAN (isothermal chimera primer initiated nucleic acid amplification) method, and a gene amplification reaction is carried out in the microchip for inspection 2 using a specimen extracted from blood or sputum, a reagent including biotin modified chimera primer for specific hybridization of the gene to be detected, a DNA polymerase having chain substitution activity and an endonuclease. (See Japanese Patent No. 3433929)

The reaction solution is fed into a flow path in which streptavidin is adsorbed after the modification process, and the amplified gene is fixed in the flow path.

Next, the probe DNA whose end has been modified by fluorescein isothiocyanate (FITC) and the fixed gene are hybridized. The gold colloid whose surface has been modified with a FITC antibody is adsorbed to the probe that has been hybridized with the fixed gene and by optically measuring the concentration of the gold colloid, the amplified gene is detected.

The microchip for inspection 2 shown in Fig. 1 is a single chip made of resin, and by introducing a specimen such as blood or the like, gene amplification reaction and detection thereof is automatically performed in the microchip for inspection 2, and genetic diagnosis for multiple items can be performed simultaneously.

For example, by simply dropping about 2-3μl of blood specimen in a chip having length and width of a few cm and by installing the microchip for inspection 2 on the inspection device body 3 of Fig. 1, the amplification reaction and detection thereof can be done.

As shown in Fig. 2, the microchip for inspection 2 has a reagent storage section 18 that is used for storing a reagent for the gene amplification reaction.

That is to say, as shown in Fig. 3, the reagent such as biotin modified chimera primer for specific hybridization of the gene to be detected, a DNA polymerase having chain substitution activity and an endonuclease is stored in the reagent storage sections 18a, 18b and 18c.

In this case, it is preferable that the reagents are stored beforehand in these reagent storage sections 18a, 18b and 18c such that inspection can be done quickly without concern for time and place. The surface of the reagent storage sections 18a, 18b and 18c is sealed in order to prevent evaporation, leakage, mixing of air bubbles, contamination, and denaturing of the reagents which are incorporated into the microchip for inspection 2.

Furthermore, when the microchip for inspection 2 is stored, reagents are sealed by a sealing material to prevent the reagents from leaking from the reagent storage sections 18a, 18b, and 18c into the micro flow paths and causing a reaction. Prior to use, when the sealing materials are under refrigeration conditions, they are in solid or gel form, and at the time of use, when under room temperature conditions, the sealing materials dissolve and are in a fluid state. The reagents are sealed by such a material like oil.

A micro-pump 11 is connected at the upstream side of each of the reagent storage sections 18a, 18b and 18c by the pump connection portion 12. Reagent is fed to the downstream flow path 15a from the reagent storage sections 18a, 18b and 18c by these micro-pumps 11.

The micro-pump 11 is incorporated into an inspection device body 3 which is separate from the microchip for inspection 2, and by attaching the microchip for inspection 2 to the inspection device body 3, the microchip for inspection 2 is connected from the pump connection portion 12. However, the micro-pump 11 may be incorporated beforehand into the microchip for inspection 2.

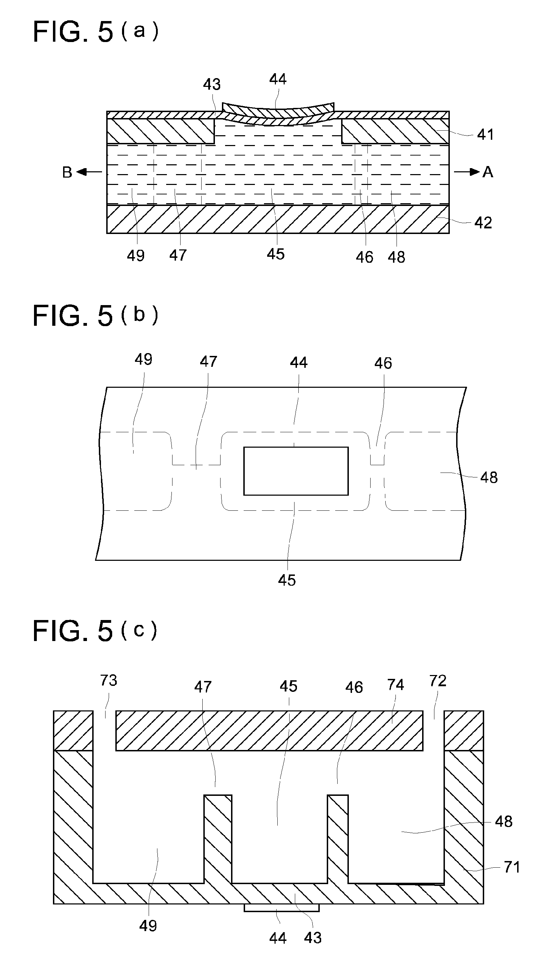

A piezo pump is preferably used as the micro-pump 11. Fig. 5 (a) is a cross-sectional view of an example of the micro-pump 11 which uses a piezo pump and Fig. 5(b) is a top view thereof.

The micro-pump 11 includes a substrate 42 forming a first fluid chamber 48, a first flow path 46, a pressure chamber 45, a second flow path 47, and a second fluid chamber 49. It further includes an upper substrate 41 which is formed as a layer on the substrate 42, and a vibration plate 43 which is formed as a layer on the upper substrate 41, a piezoelectric element 44 which is formed as a layer on the side opposite to the pressure chamber 45 of the vibration plate 43, and a drive portion (not shown) for driving the piezoelectric element 44

Fig. 5c is a cross-sectional view showing another example of the micro-pump 11. In this example, the micro-pump 11 is composed of a silicon substrate 71, a piezoelectric element 44, and a flexible wire that is not shown. The silicone substrate 71 is the one which a silicon wafer has been processed to have a prescribed shape by known photolithography techniques, and the pressure chamber 45, the vibration plate 43, the first flow path 46, the first fluid chamber 48, the second flow path 47 and the second fluid chamber 49 are formed by etching. The first fluid chamber 48 has a port 72 while the second fluid chamber 49 has a port 73 and the fluid chambers communicate with the pump connection portion 12 of the microchip for inspection 2 via these ports.

In the micro-pump 11 configured as described above, by changing the drive voltage and frequency of the pump, the feed direction and feeding speed of the fluid can be controlled.

As shown in Fig. 3, in the micro-pump 11 configured as described above, reagent is fed from the reagent storage sections 18a, 18b and 18c to the downstream flow paths 15a via the feed control section 13 and after reaching a stable mixed state in the flow path 15a, the reagent mixture is fed to the 3 branched flow paths 15b, 15d and 15c.

That is to say, the flow path 15b communicates with the specimen reaction and detection system constituted of the left side flow paths shown in Fig. 2. In addition, the flow path 15c communicates with the positive control reaction and detection system constituted of the middle flow paths shown in Fig. 2. Further, the flow path 15d communicates with the negative control reaction and detection system constituted of the right flow paths shown in Fig. 2.

The following is a description mainly of the flow paths of flow path 15b with reference to Fig. 2 and 4.

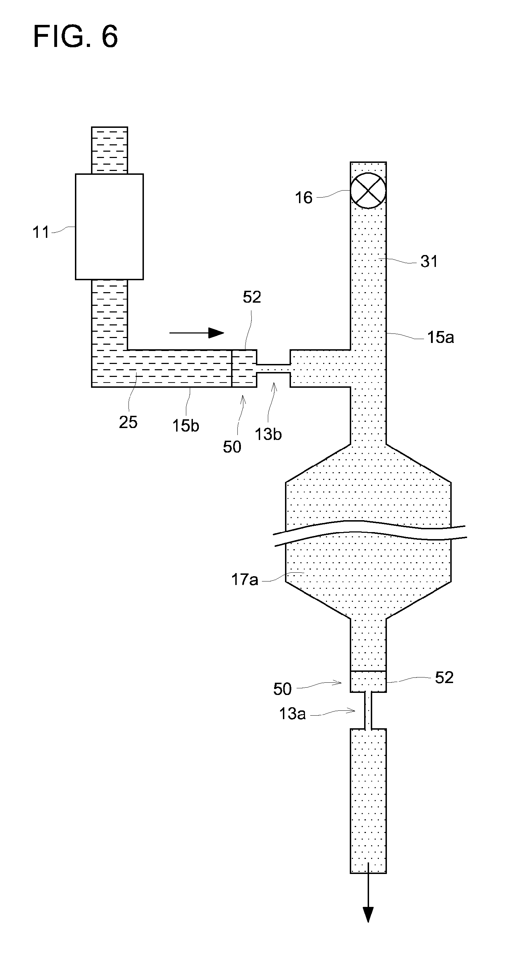

The reagent mixture that is flowed into the flow path 15b is loaded in the reservoir section 17a as shown in Fig. 4. It is to be noted that, as shown in Fig. 6, the reagent loading flow path is formed between the upstream reverse flow prevention section (check valve) 16 of the reservoir section 17a and the downstream feed control section 13a. In addition, the reagent loading flow path and a feed control section 13b which branches therefrom and communicates with the micro-pump 11 which feeds the drive fluid form the reagent quantification section.

That is to say, in the reagent quantification section, a prescribed amount of reagent mixture is loaded in the flow path (reagent loading flow path 15a) between the reverse flow prevention section 16 formed of a check valve and the feed control section 13a. A branched flow path 15b branches from the reagent loading flow path 15a and communicates with the micro-pump 11 which feeds the drive fluid.

Feeding of fixed quantities of the reagent is performed as follows. First, the reagent 31 is loaded by being supplied to the reagent loading flow path 15a using a feed pressure that does not allow the reagent 31 to pass forward from the feed control portion 13a from the reverse flow prevention portion 16 side.

Next, by feeding the drive fluid 25 in the direction of the reagent loading flow path 15a from the branched flow path 15b using the micro-pump 11 with the feed pressure that allows the reagent 31 to pass forward from the feed control portion 13a, the reagent 31 that has been loaded in the reagent loading flow path 15a is pushed forward from the feed control portion 13a, and as a result a fixed quantity of the reagent 31 is fed. It is to be noted that by providing a large capacity reservoir section 17a in the reagent loading flow path 15a, variation in the fixed volume is reduced.

On the other hand, as shown in Fig. 4, a specimen extracted from blood or sputum is introduced from the specimen storage section 20 and loaded in the reservoir section 17b. It is to be noted that the specimen storage section 20 may include a specimen preliminary processing section in which the specimen is mixed with specimen preliminary processing liquid to perform preliminary specimen processing though this section is not shown.

Also, the specimen storage section 20 has substantially the same mechanism as the reagent quantification section mentioned above and fixed quantities of specimen are loaded using the micro-pump 11, and fixed quantities are fed to the succeeding flow path 15e.

That is to say, the specimen loaded in the reservoir section 17a, and the reagent mixture loaded in the reservoir section 17b are fed to the flow path 15e via the Y-shaped flow path, and mixing and the ICAN reaction is performed in the flow path 15e.

It is to be noted that the feeding of the specimen and the reagent is done for example, by alternately driving each of the micro-pumps 11 and alternately introducing specimen and reagent mixture in a state of sections to the flow path 15e and the specimen and the reagents are quickly dispersed and mixed.

As shown in Fig. 4, the reaction stopping solution is stored in advance in the stopping solution storage section 21a, and the reaction stopping solution is fed into the flow path 15f using the micro-pump 11, and after performing the amplification reaction using the biotin modified primer, the amplification reaction is stopped by mixing the reaction solution and the stopping solution.

Next, as shown in Fig. 4, the denaturant stored in the denaturant storage section 21b and a mixture in which the reaction stopping process has been performed are mixed in the flow path 15g and one strand of the amplified gene is generated by denaturalization. Subsequently, a buffer liquid stored in a hybridization buffer storage section 21c is mixed in a flow path 15h and the obtained processing solution is divided between two detection sections 22a and 22b which are for target substance detection and internal control detection, and then fed. As a result, the gene that has been denatured to a single strand is fixed in the detection sections 22a and 22b by streptavidin adsorbed in the detection sections 22a and 22b.

A cleaning liquid, probe DNA solution, gold colloid solution marking with FITC which are stored in respective storage section 21d, 21f, 21e is fed to this detection section 22a by a single pump 11 according to the order shown in the Fig. 4. Similarly, a cleaning liquid, probe DNA solution for internal control, gold colloid solution marking with FITC which are stored in respective storage section 21d, 21f, 21e is fed to this detection section 22b by the single pump 11 according to the order shown in the Fig. 4.

As described above, the probe DNA whose end has been subjected to fluorescent marking with FITC is hybridized with one gene strand that is fixed in the detection sections 22a and 22b and thus gold colloid is bound to the fixed amplified gene via the FITC. The bound gold colloid is irradiated with a measuring beam from a LED for example, and a determination is made as to whether there was amplification or the efficiency of amplification is measured by detecting transmitted beams or reflected beams using an optical detection means such as photodiode or a photomultiplier.

It is to be noted that as shown in Fig. 2 and Fig. 3, the flow path 15c communicates with the positive control reaction and detection system composed of the flow paths in the middle of Fig. 2 and the flow path 15d communicates with the negative control reaction and detection system composed of the flow paths in the right side of Fig. 2. By feeding the reagent mixtures to the flow paths 15c and 15d, as in the case of the above-described specimen reaction and detection system of flow path 15b, after the amplification reaction is performed with the reagent in the flow path, hybridization is performed with the probe DNA stored in the probe DNA storage section in the flow path, and amplification reaction detection is done based on reaction products.

On the other hand, as shown in Figs. 2 to 4, in the aforementioned flow paths of the inspection microchip 2, at the joining section where the two flow paths join, many reverse flow prevention sections 16 for preventing reverse flow of liquids are installed. The reverse flow prevention sections 16 are composed of a check valve for closing the flow path opening by the valve element at the reverse flow pressure or an active valve for compressing the valve element against the flow path opening by the valve element transforming means and closing the opening.

In this case, as a reverse flow prevention section of the conventional inspection microchip, as disclosed in Patent Document 3 (Unexamined Japanese Patent Application Publication No. Tokugan 2004-138959), a check valve having a structure as shown in Figs. 10 to 13 is proposed.

However, the check valves of these structures have problems as described before.

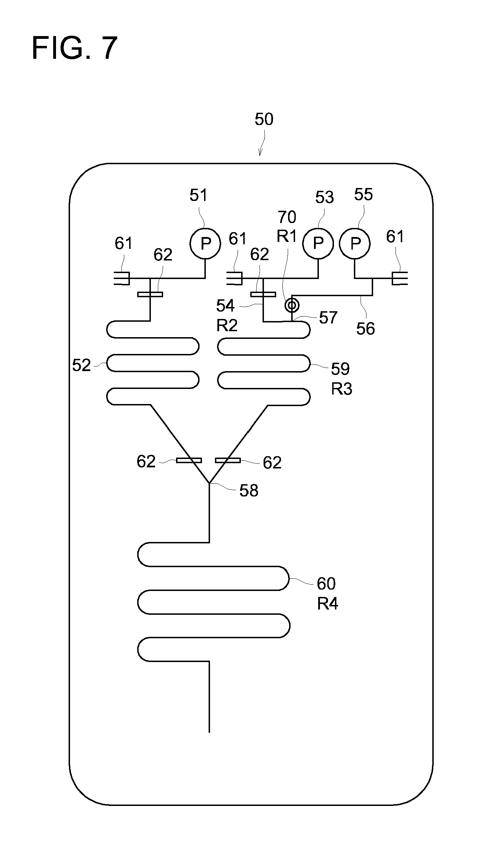

Therefore, according to the present invention, the reverse flow prevention section is structured as shown in Fig. 7.

Fig. 7 is a schematic view showing schematically the embodiment of the flow paths of the inspection microchip showing the constitution of such a reverse flow prevention section.

As shown in Fig. 7, an inspection microchip 50 has a specimen feed flow path 52 for feeding a specimen from a specimen storage section not drawn by driving by a liquid feeding pump 51.

On the other hand, the inspection microchip 50 has a first reagent flow path 54 for feeding a first reagent from a first reagent storage section not drawn by driving a liquid feeding pump 53 and a second reagent flow path 56 for feeding a second reagent from another second reagent storage section not drawn by driving a liquid feeding pump 55.

The first reagent flow path 54 and the second reagent flow path 56 are interconnected to a reagent feed flow path 59 via a joining section 57.

And, the specimen feed flow path 52 and the reagent feed flow path 59 are structured so as to interconnect to a reaction flow path 60 via a joining section 58.

And, in a second reagent flow path 56 on the upstream side of the joining section 57, a reverse flow preventing means 70 is arranged.

Further, in the drawing, numeral 61 indicates an air vent and numeral 62 indicates a liquid feeding control section. Further, the constitution aforementioned is the same as that of the components shown in Figs. 1 to 6 though they have different numerals, so that the detailed explanation will be omitted.

In the inspection microchip 50 having such a constitution, the flow path resistance relationship as indicated below is set.

Namely, as shown in Fig. 7, the flow path resistance of the reverse flow preventing means 70 is assumed as R1, the flow path resistance of the first reagent flow path 54 as R2, the flow path resistance of the reagent feed flow path 59 as R3, and the flow path resistance of the reaction flow path 60 as R4.

At this time, the flow path resistance R1 of the reverse flow preventing means 70 of the second reagent flow path 56 is set so as to be larger than the overall flow path resistance (R2 + R3 + R4) which is the total of the flow path resistance R2 of the first reagent flow path 54, the flow path resistance R3 of the reagent feed flow path 59, and the flow path resistance R4 of the reaction flow path 60 which are the upstream and downstream flow paths at the joining sections 57 and 58 of the first reagent flow path 54.

Namely, the flow resistances are set so that R1 > (R2 + R3 + R4) is held.

In the second reagent flow path 56 (one flow path) for preventing reverse flow like this, the flow path resistance R1 on the upstream side of the reverse flow preventing means 70 is set so as to be larger than the overall flow path resistance (R2 + R3 + R4) which is the total of the upstream and downstream flow path resistances of the joining sections 57 and 58 in the first reagent flow path 54 (the other flow path).

Therefore, when feeding the liquid to be fed from the first reagent flow path 54 to the reagent feed flow path 59, the flow path resistance of the reverse flow preventing means 70 is larger than the overall flow path resistance (R2 + R3 + R4) which is the total of the upstream and downstream flow path resistances of the joining sections 57 and 58 in the first reagent flow path 54, so that the liquid is surely prevented from reverse flow to the second reagent flow path 56 on the upstream side of the reverse flow preventing means 70.

Further, when feeding the liquid to be fed from the second reagent flow path 56 to the reagent feed flow path 59, the liquid is fed at a pump pressure P2 larger than the flow path resistance R1 of the reverse flow preventing means 70, thus the liquid to be fed through the reverse flow preventing means 70 from the second reagent flow path 56 can be fed to the reagent feed flow path 59.

Therefore, the pump pressure P2 of the liquid feeding pump 55 feeding to the second reagent flow path 56 is set to a pump pressure higher than a pump pressure P1 of the liquid feeding pump 53 to the first reagent flow path 54, and the operation of the liquid feeding pumps 53 and 55 is switched, thus a liquid to be selectively fed from the first reagent flow path 54 and the second reagent flow path 56 can be fed surely to the reagent feed flow path 59 and a liquid from the reagent feed flow path 59 to the second reagent flow path 56 to be prevented from reverse flow can be prevented surely from reverse flow.

Moreover, when the operation of the liquid feeding pumps 53 and 55 is switched like this, the liquid from the first reagent flow path 54 and the liquid from the second reagent flow path 56 become laminar flows and these liquids are mixed efficiently in the reagent feed flow path 59.

In this case, in consideration of the reverse flow prevention effect aforementioned, it is desirable to set R1 to 1 to 100 times, preferably 5 to 30 times of (R2 + R3 + R4).

Further, it is possible to feed the second reagent from the second reagent flow path 56 (one flow path) having the flow path resistance of the reverse flow preventing means 70 to the reagent feed flow path 59 which is a joining section of the downstream flow path and collect (fill up) the liquid and then further squeeze the mixed reagents downward by the first reagent of the first reagent flow path 54 (the other flow path).

By use of such a constitution, with the reverse flow preventing means 70 being a boundary, the interaction of the liquid flow is cut off on the upstream side and downstream side, so that more accurate liquid feeding is made possible.

Further, at this time, if the liquid feeding pump 55 feeding to the second reagent flow path 56 (one flow path) is not driven, due to the liquid pressure in the first reagent flow path 54 (the other flow path) having the flow path resistance of the reverse flow preventing means 70, reverse flow, though slight, is caused in the second reagent flow path 56 (one flow path). To prevent it, the liquid feeding pump 55 in the second reagent flow path 56 (one flow path) is driven at a lower pressure than that of the liquid feeding pump 53 in the first reagent flow path 54 (the other flow path), thus the slight reverse flow aforementioned can be prevented.

Therefore, it may be structured so that a reagent, a specimen, a mixed liquid thereof, or a treated liquid is fed from one flow path having flow path resistance of the reverse preventing means to the downstream side of the joining section, the target liquid is collected in the flow path on the downstream side, and the concerned liquid is squeezed downward by a liquid in the other flow path.

By use of such a constitution, with the reverse flow preventing means being a boundary, the interaction of the liquid flow is cut off on the upstream side and downstream side, so that more accurate liquid feeding is made possible.

Further, at this time, if the liquid feeding pump to one flow path is not driven, (although there is the flow path resistance of the reverse flow preventing means) due to the liquid pressure in the other flow path, reverse flow, though slight, is caused in one flow path. To prevent it, the liquid feeding pump in one flow path is driven at a lower pressure than that of the liquid feeding pump in the other flow path, thus the slight reverse flow aforementioned can be prevented.

Further, in this case, the liquid in the other flow path may not be a reagent or a specimen but may be a driving liquid for pressing out them.

Further, this embodiment uses one flow path for preventing reverse flow as the second reagent flow path 56 and the other flow path as the first reagent flow path 54, though it is not limited to the combination thereof. Therefore, for example, in the inspection microchip, the reverse flow prevention structure of the present invention can be applied so that one flow path is used as a reagent flow path communicating with the reagent storage section for storing a reagent, and the other flow path is used as a specimen flow path communicating with the specimen storage section for storing a specimen.

Therefore, the pressure of the liquid feeding pump to the reagent flow path is set to a pump pressure higher than the pressure of the liquid feeding pump to the specimen flow path, and the operation of the liquid feeding pumps is switched, thus the reagent from the reagent flow path and the specimen from the specimen flow path can be selectively fed surely to the joining flow path, and the reverse flow is prevented so that the reverse flow of the joined liquid from the joining flow path to the reagent flow path can be surely prevented for prevention of the contamination of the reagent storage section.

Moreover, the operation of the liquid feeding pumps is switched like this, thus the reagent from the reagent flow path and the specimen from the specimen flow path become laminar flows and the reagent and specimen are mixed efficiently in the joining flow path, and an accurate inspection can be executed, and a highly reliable inspection microchip can be provided.

In this case, the "flow path resistance" is equivalent to a coefficient of the pressure loss when the liquid flows through the flow path.

Namely, assuming the flow rate as Q and the pressure loss due to flowing of the liquid through the flow path as $\Delta P$, the flow path resistance R (N.s/m$^5$) is R = $\Delta P/Q$, where N indicates force (Newton) and s indicates time (second).

Therefore, the value of "flow path resistance" can be obtained by applying pressure to the entrance of the flow path, thereby allow a fluid to flow, measure the flow rate at that time, and divide the pressure by the flow rate.

For example, the effective internal flow path resistance R2 of the liquid feeding pump 55 can be decided by R2 = P/Q by obtaining the flow rate Q and generated pressure P at a predetermined drive voltage.

Particularly, in fine and long flow paths as in the inspection microchip of the present invention and when a laminar flow is dominant, the flow path resistance R is expressed by:

Formula 1

$$\int \{32 \times \eta / (S \times \phi^2)\} dL$$

where $\eta$ indicates viscosity, S indicates a sectional area, $\phi$ indicates an equivalent diameter, and L indicates a flow path length. Further, when the sectional shape of the flow path is a rectangle, assuming the width of the flow path as "a" and the height thereof as "b":

Formula 2

$$\phi = (a \times b) / \{(a + b) / 2\}$$

Therefore, as Formulas 1 and 2 show, as the sectional area S is made smaller and the flow path length L is made longer, the flow path resistance can be made larger.

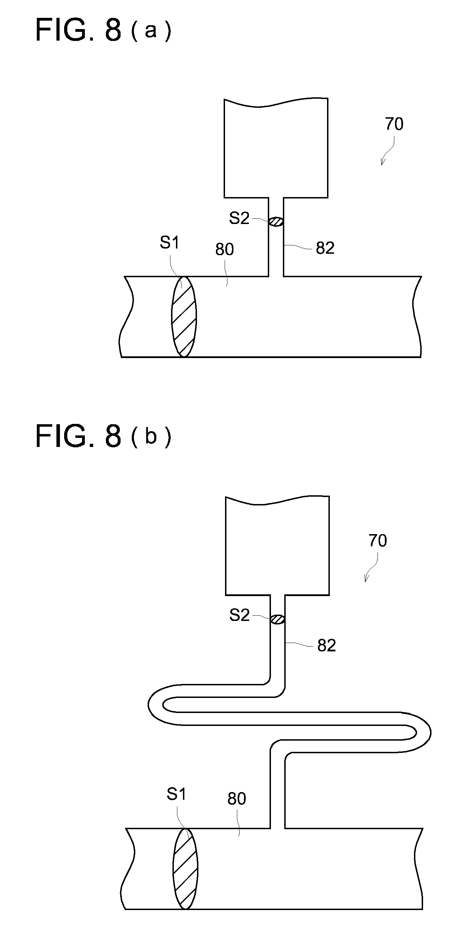

Therefore, the reverse flow preventing means 70, for example, as shown in Fig. 8(a), can be composed of a reverse flow prevention flow path 82 having a flow path sectional area S2 which is smaller than a flow path sectional area S1 of a flow path 80 on the downstream side and the flow path length of the reverse flow preventing means 70 can be made longer.

In this case, as shown in Fig. 8(b), if the reverse flow prevention flow path 82 having the flow path sectional area S2 which is smaller than the flow path sectional area S1 of the flow path 80 on the downstream side is curved and the flow path length of the reverse flow prevention flow path 82 is made longer, the flow path resistance can be increased.

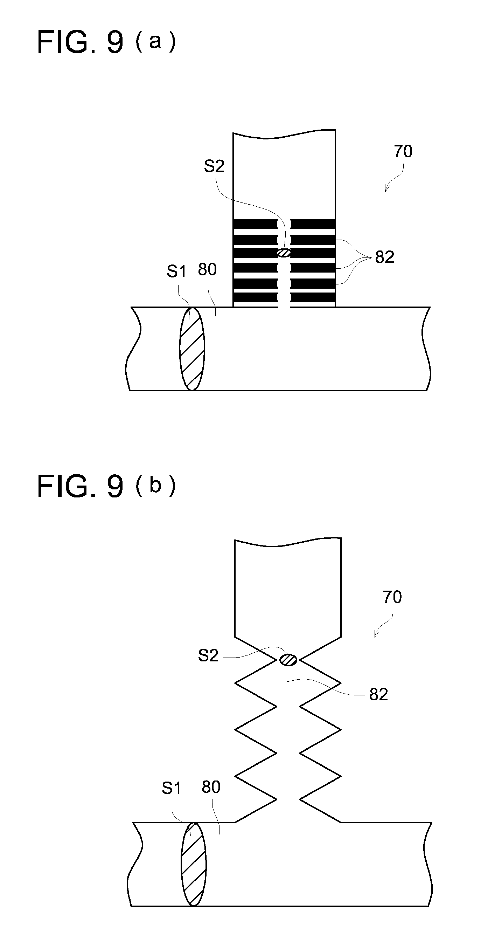

Further, as shown in Fig. 9(a), for the reverse flow preventing means 70, the reverse flow prevention flow path 82 equipped with a baffle plate member 84 so as to make the flow path sectional area S2 smaller than the flow path sectional area S1 of the flow path 80 on the downstream side may be used.

Further, as shown in Fig. 9(b), for the reverse flow preventing means 70, the reverse flow prevention flow path 82 equipped with a bellows-shaped fine-diameter part 86 so as to make the flow path sectional area S2 smaller than the flow path sectional area S1 of the flow path 80 on the downstream side may be used.

Further, the reverse flow preventing means 70, to change the flow path resistance, may be composed of a reverse flow prevention flow path made of a material having a flow path resistance higher than the flow path resistance of the material for forming the flow path on the downstream side.

By use of such a constitution, the flow path resistance of flow from the flow path made of a material having a low flow path resistance on the downstream side to the reverse flow prevention flow path made of a material having a high flow path resistance is increased, thus reverse flow from the joining section on the downstream side through the reverse flow prevention flow path to the flow path on the upstream side of the reverse flow prevention flow path can be prevented surely.

Preferable embodiments of this invention were described above, but these are not intended to limit the invention, and in the above examples, the ICAN method was used as the inspection microchip for gene screening, but various modifications may be made to arrangement, configuration, dimensions, size and the like, in accordance with the type of specimen and the items to be screened provided that they do not depart from the scope of the invention.

**Claims**

1. A reverse flow prevention structure comprising:

   a joining section in which two flow path join; and
   a reverse flow preventing device provided in one flow path upstream of the joining section;

   wherein a flow path resistance of the reverse flow preventing device is set to be larger than an overall flow path resistance which is a total of upstream and downstream flow path resistances of the joining section in another flow path.

2. The reverse flow prevention structure of claim 1, wherein the reverse flow preventing device comprises a reverse flow prevention flow path having a smaller flow path sectional area than a flow path sectional area of a downstream side.

3. The reverse flow prevention structure of claim 2, wherein the reverse flow preventing device comprises the reverse flow prevention flow path provided with a baffle plate positioned in the flow path.

4. The reverse flow prevention structure of claim 1, wherein the reverse flow prevention structure is a reverse flow prevention structure in a microchip for inspection.

5. A microchip for inspection comprising:

   a specimen storage section for storing a specimen;
   a reagent storage section for storing a reagent;
   a reaction section having a reaction flow path for performing a predetermined reaction process by joining a specimen stored in the specimen storage section and a reagent stored in the reagent storage section;
   an inspection section having an inspection flow path for performing a predetermined inspection of a reaction process substance obtained by reaction in the reaction section;

   wherein the specimen storage section, the reagent storage section, the reaction section and the inspection section are connected by a flow path continuously from an upstream side to a downstream side, and the microchip further comprising:

   a joining section in which two flow paths join; and
   a reverse flow preventing device provided on one flow path upstream of the joining section;

   wherein a flow path resistance of the reverse flow preventing device is set to be larger than an overall flow path resistance which is a total of upstream and downstream flow path resistances of the joining section in another flow path.

6. The microchip for inspection of claim 5,

wherein a liquid such as a reagent, a specimen, a mixture thereof or a processed liquid thereof is fed to a downstream side of the joining section from the one flow path so as to collect the liquid in a downstream flow path and the liquid is pushed more downstream by a liquid from another flow path.

7. The microchip for inspection of claim 5, wherein the reverse flow preventing device comprises a reverse flow prevention flow path having a smaller flow path sectional area than a flow path sectional area of a downstream side.

8. The microchip for inspection of claim 7, wherein the reverse flow preventing device comprises the reverse flow prevention flow path provided with a baffle plate positioned in the flow path.

9. The microchip for inspection of claim 5, wherein the specimen storage section comprises a specimen preliminary processing section for joining a specimen and a specimen preliminary processing liquid and for performing a specimen preliminary processing.

10. An inspection device, wherein a microchip for inspection of claim 5 is mounted detachably on the inspection device so that an inspection in an inspection section of the microchip is performed.

# FIG. 1

# FIG. 2

# FIG. 3

FIG. 4

## FIG. 5 (a)

## FIG. 5 (b)

## FIG. 5 (c)

## FIG. 6

# FIG. 7

# FIG. 8 ( a )

S2

S1    80    82

70

# FIG. 8 ( b )

70

S2

82

S1    80

## FIG. 9 ( a )

## FIG. 9 ( b )

FIG. 10 (a)

FIG. 10 (b)

## FIG. 11 (a)

## FIG. 11 (b)

FIG. 12 ( a )

164    181    163

162

165    161

FIG. 12 ( b )

164    181    163

B

A

162

165    161

# FIG. 13 ( a )

# FIG. 13 ( b )

**INTERNATIONAL SEARCH REPORT**

| International application No. |
|---|
| PCT/JP2006/305109 |

A.  CLASSIFICATION OF SUBJECT MATTER
*B01J19/00*(2006.01), *G01N35/08*(2006.01), *G01N37/00*(2006.01)

According to International Patent Classification (IPC) or to both national classification and IPC

B.  FIELDS SEARCHED

Minimum documentation searched (classification system followed by classification symbols)
*B01J4/00-B01J4/04*(2006.01), *B01J14/00-B01J19/32*(2006.01), *G01N35/08*(2006.01), *G01N37/00*(2006.01)

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2003-181255 A  (Minolta Co., Ltd.),<br>02 July, 2003 (02.07.03),<br>Claims; Par. Nos. [0002] to [0004], [0027] to [0047], [0052] to [0059]; Figs. 4 to 9<br>(Family: none) | 1,4<br>2,3,5-10 |
| Y | JP 3-223674 A  (Mochida Pharmaceutical Co., Ltd.),<br>02 October, 1991 (02.10.91),<br>Claims; page 7, upper right column, line 16 to page 8, upper left column, line 2; Figs. 3b, 3c<br>& EP 0430248 A2            & US 5147607 A | 2,3,7,8 |

☒  Further documents are listed in the continuation of Box C.    ☐  See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>30 May, 2006 (30.05.06) | Date of mailing of the international search report<br>06 June, 2006 (06.06.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/305109 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2-293393 A  (Fujitsu Ltd.),<br>04 December, 1990 (04.12.90),<br>Claims; page 4, upper right column,<br>lines 14 to 18; Fig. 4<br>(Family: none) | 3,8 |
| Y | JP 2005-021866 A  (Yokogawa Electric Corp.),<br>27 January, 2005 (27.01.05),<br>Claims; Par. Nos. [0024] to [0035]; Fig. 1<br>& US 2004/0254559 A1 | 5-10 |
| P,X | JP 2005-326392 A  (Tama-TLO Kabushiki Kaisha),<br>24 November, 2005 (24.11.05),<br>Claims; Par. Nos. [0010], [0011], [0026]; Fig. 1<br>(Family: none) | 1,2,4 |

Form PCT/ISA/210 (continuation of second sheet) (April 2005)

**EP 1 867 385 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001322099 A
- JP 2004108285 A
- JP 2004 A
- JP 138959 A
- JP 2004138959 A
- JP 3433929 B

**Non-patent literature cited in the description**

- **FUSAO KIMIZUKA ; YUNOSHIN KATO.** Protein, nucleic acid, enzyme. Kyoritsu Shuppan, Ltd, 1998, vol. 43